# EUROPEAN PATENT SPECIFICATION

(11) **EP 2 649 351 B1**
(45) Date of publication and mention of the grant of the patent: **29.05.2019**
(21) Application number: 11807737.9
(22) Date of filing: 05.12.2011
(51) Int. Cl.: F16K 15/14, F16K 15/18, F16K 37/00

(54) **DOSAGE VALVE AND RELATIVE METHOD**
DOSIERVENTIL UND ENTSPRECHENDES VERFAHREN
SOUPAPE DE DOSAGE ET PROCÉDÉ ASSOCIÉ

(30) Priority: 06.12.2010 IT UD20100224
(43) Date of publication of application: 16.10.2013
(73) Proprietor: COROB S.p.A., 41038 San Felice sul Panaro (MO) (IT)
(72) Inventor: MORSELLI, Emanuele, I-41032 Cavezzo (IT)
(74) Representative: Petraz, Gilberto Luigi
(86) International application number: PCT/IB2011/002941
(87) International publication number: WO 2012/076960

(56) References cited:
- WO-A1-2005/036039
- FR-A1- 2 639 085
- US-A1- 2003 116 197
- US-B1- 6 280 148
- US-B1- 6 895 130

## Description

### FIELD OF THE INVENTION

The present invention concerns a dosage valve of the membrane type, able to be used in a machine for dispensing fluid products.

In particular, the dosage valve is advantageously applied in machines for dispensing colorants, inks, paints or similar products, but it cannot be excluded that it may also be applied for other types of liquid products and fluids, such as medicines or others.

The dosage valve according to the present invention allows to deliver a defined quantity of the above products with extreme precision, also reducing the risks and frequency of blockages and hence maintenance, and also the influence due to emulsified air bubbles in the colorant or other fluid substance dispensed.

The present invention also concerns the method connected to the dosage valve and a dispensing machine adopting the dosage valve.

### BACKGROUND OF THE INVENTION

In the field of dispensing machines for fluids such as colorants, inks, paints or similar products, it is known to use dosage valves associated with gear pumps, piston pumps, bellows pumps or others. The dosage valves may be disposed either at one end of the delivery pipe, for example near the dispensing nozzle for introducing the liquids into one or more containers, or in any other position in the dosage circuit.

The dosage valve is disposed substantially in a central position with respect to a hollow tubular body and has an open position for the dosed delivery of the colorant, and a closed position to stop delivery.

Dosage valves are known, made of elastomer material, which have a transit compartment defined by knife-like edges facing each other and in contact when the dosage valve is closed, and detached when the dosage valve is open.

Among these valves made of elastomer material, there are those known with a discoid or ring-shaped membrane, those of the dome type, the so-called "duckbill" valves, an example of which is shown in US 2003/116197 A1, valves known as "umbrella" valves, of the flanged type, with a sleeve and so on.

One disadvantage of known dosage valves of the elastomer type is that the movement into the open position does not always and constantly occur as desired. Furthermore, the presence of possible air bubbles in the fluid substance passing through is not always detected. One or more air bubbles present, for example, in a colorant prevents a desired and precise delivery, and causes inaccuracies in the mixture and hence in the final color.

It should be considered that applications in machines for dosing colorants require systems able to cause the opening of the valve both with doses of volumes of liquid in the range of thousandths of a cubic centimeter, and also volumes in the range of thousands of centimeters in flow rates from 0.5 cubic centimeters a second to 20 cubic centimeters a second, obtaining optimum performance in repeatability and accuracy.

Also the presence of solid particles in the colorants can modify the behavior of the dosage valve, which solid particles remain trapped between the knife-like edges and compromise the seal of the valve itself.

A further disadvantage of known dosage valves is that, in order to guarantee the hermetic seal and to contrast the pressure of the colorant or the pressure of the head alone, the contact pressure normally exerted by the knife-like edge on the elastomer ring membrane is about 10 kg/cm², in combination with the possible presence of hard or solid particles in the fluid. This causes an initial and permanent deformation of the packing, which compromises its sealing function.

One purpose of the present invention is to achieve a dosage valve for fluid products, for example applicable in a dispensing machine for colorants, inks, paints or similar products, which allows to deliver any type of colorant, possibly contaminated, with great accuracy and repeatability and which needs no or minimal maintenance operations.

Another purpose of the present invention is to achieve a dosage valve for fluid products which is constantly controllable, without needing to open the machine to access the dosage valve itself.

Another purpose is to obtain a dosage valve that allows not to distort the dosage, even in the presence of air bubbles in the colorant or any other fluid product to be delivered.

The Applicant has devised, tested and embodied the present invention to overcome the shortcomings of the state of the art and to obtain these and other purposes and advantages.

### SUMMARY OF THE INVENTION

The present invention is set forth and characterized in the independent claims, while the dependent claims describe other characteristics of the invention or variants to the main inventive idea.

The dosage valve according to the present invention comprises an elastic or elastomer element of the membrane type, associated with a delivery pipe of the fluid products and cooperating with a valve body having an inlet aperture and an opposite outlet aperture for the fluid product.

The elastomer element comprises at least an at least partly convex surface preferably facing toward the inlet aperture, and an opposite surface, at least partly concave, facing toward the outlet aperture of the valve.

The elastomer element is also provided with at least a through notch that connects the convex surface with the concave surface, which through notch defines two opposite edges or lips configured to selectively obstruct the delivery, when the pressure of the fluid product acting on the convex surface is below a predetermined threshold.

According to one feature of the present invention, the membrane type elastomer element is configured to open only due to the pressure exerted by the fluid, with a threshold value of the pressure in the circuit of around 0.2 bar, and then closes again when the pressure is lower, without using any actuators or other type of drive device whatsoever.

The two edges of the through notch are mobile, when the pressure of the fluid product acting on the convex surface exceeds the threshold value, into at least a second position in which they are partly separated to define a delivery aperture, or transit compartment, of the fluid product toward the outlet aperture.

Thanks to this configuration, the dosage valve according to the present invention allows to obtain a substantially automatic and extremely precise opening function, as a function of the pressure of the fluid product acting on the convex surface.

According to a variant of the present invention, the through notch on the elastomer element is generated so as to define at least three, four or more edges.

According to the present invention, the dosage valve has at least a sensor element associated with at least one edge, the sensor element detecting the open/closed position of the edge.

In particular, the sensor element detects the position of the at least one edge with respect to an inactive condition with zero delivery, so that it can signal an open valve condition and also the entity of opening of the valve, and a closed valve condition.

According to one embodiment of the present invention, the sensor element is made in a single piece with the edge and drowned inside the edge.

In a preferred solution of the present invention, the sensor element has at least one part integrated and drowned in the elastomer membrane, having a thickness in the range of 0.1-0.2 mm. The thickness of the elastomer material, at least in the zone where the sensor element is drowned, is in the range of a millimeter.

In another preferred solution, the sensor element is of the type able to detect a flexion of at least one edge of the dosage valve by means of a potentiometric detection. The sensor element has at least a part that extends into the body of the membrane into close proximity with the position of the opening edges, and in any case into a zone where the movement of the edges is particularly perceived.

In an applicative solution, the potentiometric sensor consists of a substrate treated with a conductive paint that changes its conductivity at the moment it is flexed, even with extremely limited flexion values.

The sensor element is also associated with an electronic acquisition system able to determine, with extremely high resolution, micrometric movements of the membrane.

Thanks to the combination of the proximity of the sensor element to the position of the opening edges, to the extremely limited thickness of the sensor element due to the part drowned in the body of the membrane, and to the detection characteristics of the variation in conductivity, the sensor element according to the present invention is able to guarantee an extremely precise and accurate detection even when there is an extremely limited flexion corresponding to the dosage of an extremely limited quantity of fluid product.

According to another variant, the sensor element is co-molded with the material of the elastomer membrane that defines the opening/closing element of the dosage valve.

It is a characteristic of the present invention, as stated, to provide that the sensor element has the sensitive part disposed as close as possible to the zone subjected to greatest flexion, or deformation in general, in its passage from the open to the closed position, so that the sensitivity and speed of detection is optimized.

Another variant provides that two or more of the sensors are integrated into a single one alone.

Another evolution of the present invention is to provide the sensor element consisting of a bar made of insulating material with high chemical-physical performance, extremely thin and elastic, on which the metal electric conductors are deposited, and which carries at its head the at least one sensitive element drowned or incorporated in the material of the membrane.

By means of the electric conductors the value of electric conductivity indicating the opened/closed state of the valve can be found, and transmitted to a control and command unit that governs the delivery means of the fluid substance.

### BRIEF DESCRIPTION OF THE DRAWINGS

- fig. 1 is a front view of a dosage valve according to the present invention with two facing lips;
- fig. 2 is the section from A to A of the dosage valve in fig. 1;
- figs. 3 and 4 show respectively a side view and a perspective view of the sensor element used in the valve in fig. 1;
- fig. 5 shows a block diagram of a control system that uses the valve in fig. 1.

### DETAILED DESCRIPTION OF A PREFERENTIAL FORM OF EMBODIMENT

In the following description, particular reference will be made to the application of an elastomer dosage valve 10 of the membrane type to a machine for dispensing colorant, paints or similar fluid products, although this application must not be considered restrictive of the field of the present invention.

The dosage valve 10 is at least partly made of elastomer material and has a membrane element 11 with a central part 12 which, in this case, has a flexion zone 13.

The valve 10 has limited sizes, in this case a diameter "D" comprised between about 12 and about 20 mm, advantageously between about 14 and about 17 mm, and a maximum bulk in height "H" in the range of about 5 mm.

In the central part 12, in this case, there is a cut or notch 24 that defines two lips 14 that create two opposite edges. The cut has a length comprised between about 5 and 8 mm, advantageously comprised between 6 and 7 mm.

Due to the structure of the central part 12, the lips 14 are normally close together so as to create a sealed closure; only when the minimum pressure threshold is reached in the direction of flow, determined by a colorant to be delivered, do they become detached, generating a compartment through which the colorant passes. The valve 10 according to the present invention has a pressure threshold of about 0.2 bar, and when this is exceeded the lips 14 open to allow the fluid product to pass in the direction of delivery.

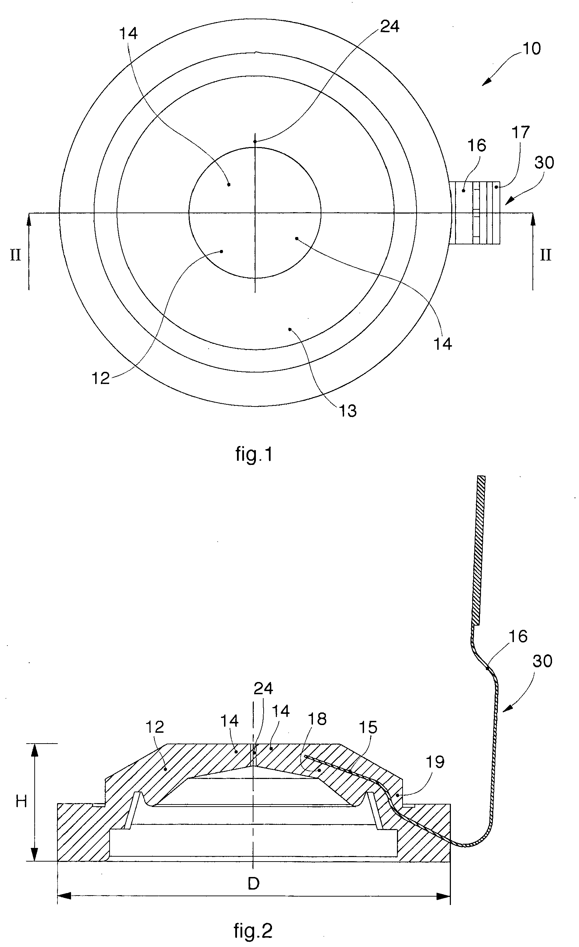

As can be seen in fig. 2, a sensor element 30 is made in a single piece with the membrane element 11. In particular, the sensor element 30 consists of a support bar 16 having a sensitive element 15 at the end. The conformation and position of the sensitive element 15 in this case allows to control two zones of the membrane 11, precisely a first zone 18, which communicates the closed or open condition of the lips 14, and a second zone 19 that communicates the presence of flexion in the direction of flow, detecting the entity of the depression generated by the pressure, and hence the entity of the opening of the lip.

The sensitive element 15 of the sensor element 30 in this case has characteristics of electric conductivity, and therefore any deformation of one of its parts caused by the flexion/deformation of the elastomer material of the membrane element 11 causes a variation in the electric conductivity whose value in ohms is directly correlated to the entity of the aperture of the cut 24 between the lips 14

In one embodiment of the present invention, the bar 16 is made of plastic material treated with a conductive paint that changes its conductivity when the bar 16, in particular the sensitive element 15 drowned in the membrane element, is flexed due to the opening of the lips 14 due to the pressure of the fluid.

In this case, the sensor element 30 has a thickness of about 0.1 mm in its part corresponding to the sensitive element 15, which is drowned in a thickness of about 1 mm of the zones 18 and 19 of the membrane element.

In correspondence with its end part outside the membrane element, there is a stiffening and reinforcement zone 17.

In correspondence with the second zone 19 the sensitive element 15 may cooperate, in a variant, not shown, with a second sensor element in order to generate an opening/closing signal of the valve.

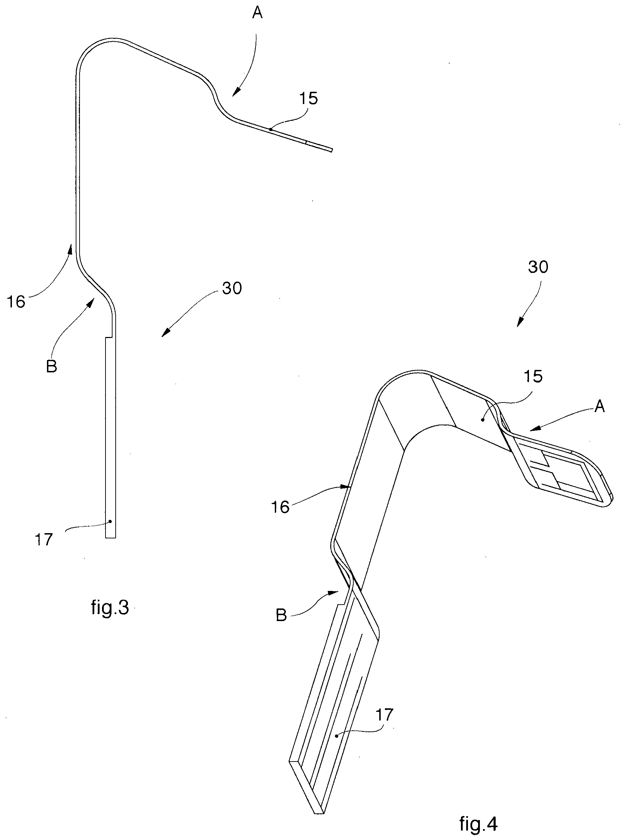

The bar 16 has a double flexion conformation (respectively zone A and zone B - fig. 3 and 4) which accentuates the sensitivity to deformation through flexion.

Thanks to this overall conformation, the sensor element 30 is able to determine the opening of the lips 14 both with doses of liquids in the order of thousandths of a cubic centimeter, and also with volumes in the order of thousands of cubic centimeters in the field of flow rates from 0.5 cubic centimeters a second to 20 cubic centimeters a second, with excellent performance in repeatability and accuracy.

An extremely flexible printed circuit is made on the bar 16, by means of which the signal is suitably transferred to processing means.

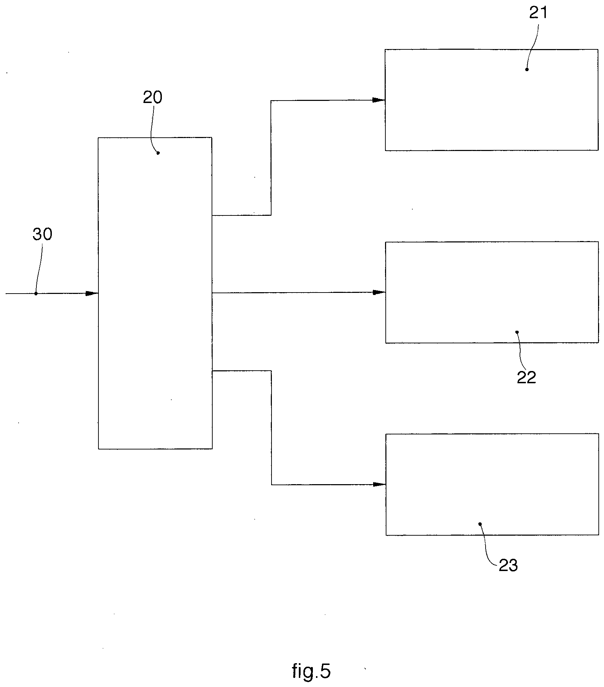

For example, as shown schematically in fig. 5, the sensor element 30 is connected to processing means 20 which are able to evaluate the presence or absence of the signal arriving from the first 18 and/or the second 19 flexion zone.

Depending on the type of variation in conductivity that is determined by the deformation of the edges, the processing means 20 govern delivery means 21 for the fluid product and/or start/stop means 22 and machine control means 23.

The signal arriving from the processing means 20 also serves to control the state of the membrane and its condition.

Depending on the signal arriving, this control may authorize or not the delivery means 21, it may authorize or not the start/stop means 22, or it can indicate the need for a maintenance intervention or replacement of the dosage valve 10.

It is clear that modifications and variants may be made to the present invention, all of which shall come within the field of protection defined by the attached claims.

## Claims

1. Dosage valve for a fluid product, for example a colorant, comprising an at least partly elastic or elastomer element (11), having at least a cut (24) in a central part (12) so as to define at least two closed/open cooperating lips (14), **characterized in that** it comprises a sensor element (30) associated with said at least partly elastic element (11) in order to detect at least a closed or open condition of said lips (14), wherein said open condition is determined by the pressure exerted by said fluid product, said sensor element (30) consists of a support bar having a sensitive element (15) at one end drowned inside the elastic or elastomer element (11), able to detect a flexion of at least one lip (14) of the valve by means of a variation in its conductivity at the moment when said lip (14) is flexed upon opening, wherein said sensitive element (15) of the sensor element (30) is associated to two zones of the elastic or elastomer element (11), respectively a first zone (18) which communicates the closed or open condition of the lips (14) and a second zone (19) that communicates the presence of flexion in the direction of flow of the fluid product.

2. Dosage valve as in claim 1, **characterized in that** said drowned sensitive element (15) of the sensor element (30) has a thickness in the range of 0.1-0.2 millimeters.

3. Dosage valve as in claim 1, **characterized in that** said bar (16) is made of plastic material coated with a conductive paint.

4. Dosage valve as in claim 3, **characterized in that** said bar (16) has a conformation comprising two flexion zones (A, B) to accentuate the sensitivity in detecting flexion.

5. Dosage valve as in claim 1, **characterized in that** the part of the elastic or elastomer element (11) where the sensitive element (15) of the sensor element (30) is drowned has a thickness in the range of 1 millimeter.

6. Dosage valve as in claim 1, **characterized in that** the sensor element (30) is co-molded with the material of the elastic or elastomer element (11).

7. Dosage valve as in claim 1 or 2, **characterized in that** the sensor element (30), in correspondence with its end part outside the elastic or elastomer element (11), has a stiffened and reinforced zone (17).

8. Dosage valve as in claim 1, **characterized in that** said sensor element (30) is associated with processing means (20) to detect information from said sensor element (30) on the open/closed state of said lips (14).

9. Method for dosing a fluid product by means of a dosage valve (10) as in any claim hereinbefore, wherein by controlling by means of the sensor element (30) at least the position of said lips (14), the delivery and dosing means (21) of the fluid product are controlled and commanded.

10. Method as in claim 9, **characterized in that,** by controlling by means of the sensor element (30) at least the position of said lips (14), the conditions of the dosage valve (10) are determined and the interventions and the type of interventions are defined.

11. Method as in any claim from 9 to 10, **characterized in that,** by controlling by means of the sensor element (30) at least the state of a central part (12) of the elastic or elastomer element (11), the presence or absence of a pressure in the direction of flow is defined.

12. Dosing machine for a fluid product, for example a colorant, **characterized in that** it has a dosage valve (10) as in any claim from 1 to 8.

## Patentansprüche

1. Dosierventil für ein Fluidprodukt, zum Beispiel ein Farbmittel, aufweisend ein wenigstens teilweise elastisches oder elastomeres Element (11), das wenigstens einen Ausschnitt (24) in einem zentralen Abschnitt (12) hat, um wenigstens zwei geschlossene/geöffnete, zusammenwirkende Lippen (14) zu definieren, **dadurch gekennzeichnet, dass** es aufweist ein Sensorelement (30), das mit dem wenigstens teilweise elastischen Element (11) zusammenhängt, um wenigstens einen geschlossenen oder geöffneten Zustand der Lippen (14) zu erfassen, wobei der geöffnete Zustand durch den Druck bestimmt wird, der von dem Fluidprodukt ausgeübt wird, wobei das Sensorelement (30) aus einer Haltestange besteht, die an einem Ende ein sensitives Element (15) hat, das im Inneren des elastischen oder elastomeren Elements (11) eingebettet ist und imstande ist, ein Biegen wenigstens einer Lippe (14) des Ventils zu erfassen mittels einer Veränderung in seiner Leitfähigkeit in dem Moment, wenn die besagte Lippe (14) auf das Öffnen gebogen wird, wobei das sensitive Element (15) des Sensorelements (30) zu zwei Zonen des elastischen oder elastomeren Elements (11) assoziiert ist, respektive einer ersten Zone (18), welche den geschlossenen oder geöffneten Zustand der Lippen (14) kommuniziert, und einer zweiten Zone (19), welche das Vorliegen eines Biegens in Fluss-Richtung des Fluidprodukts kommuniziert.

2. Dosierventil gemäß Anspruch 1, **dadurch gekennzeichnet, dass** das eingebettete sensitive Element (15) des Sensorelements (30) eine Dicke im Bereich von 0,1-0,2 Millimeter hat.

3. Dosierventil gemäß Anspruch 1, **dadurch gekennzeichnet, dass** die Stange (16) aus Kunststoffmaterial gemacht ist, das mit einem leitfähigen Anstrich versehen ist.

4. Dosierventil gemäß Anspruch 3, **dadurch gekennzeichnet, dass** die Stange (16) eine Gestalt hat mit zwei Biegezonen (A, B), um die Sensitivität zum Erfassen von Biegen zu akzentuieren.

5. Dosierventil gemäß Anspruch 1, **dadurch gekennzeichnet, dass** der Abschnitt des elastischen oder elastomeren Elements (11), wo das sensitive Element (15) des Sensorelements (30) eingebettet ist, eine Dicke im Bereich von 1 Millimeter hat.

6. Dosierventil gemäß Anspruch 1, **dadurch gekennzeichnet, dass** das Sensorelement (30) mit dem Material des elastischen oder elastomeren Materials (11) zusammen geformt ist.

7. Dosierventil gemäß Anspruch 1 oder 2, **dadurch gekennzeichnet, dass** das Sensorelement (30), korrespondierend mit seinem Endabschnitt außerhalb des elastischen oder elastomeren Elements (11), eine versteifte und verstärkte Zone (17) hat.

8. Dosierventil gemäß Anspruch 1, **dadurch gekennzeichnet, dass** das Sensorelement (30) mit Verarbeitungsmitteln (20) zusammenhängt, um Informationen von dem Sensorelement (30) über den geöffneten/geschlossenen Zustand der Lippen (14) zu erfassen.

9. Verfahren zum Dosieren eines Fluidprodukts mittels eines Dosierventils (10) gemäß irgendeinem vorhergehenden Anspruch, wobei durch Steuern mittels des Sensorelements (30) wenigstens der Position der Lippen (14), die Zuführ- und Dosiermittel (21) des Fluidprodukts gesteuert und angesteuert werden.

10. Verfahren gemäß Anspruch 9, **dadurch gekennzeichnet, dass** durch Steuern mittels des Sensorelements (30) wenigstens der Position der Lippen (14) die Zustände des Dosierventils (10) bestimmt werden und die Interventionen und der Typ von Interventionen definiert werden.

11. Verfahren gemäß irgendeinem Anspruch von 9 bis 10, **dadurch gekennzeichnet, dass** durch Steuern mittels des Sensorelements (30) wenigstens des Zustands eines zentralen Abschnitts (12) des elastischen oder elastomeren Elements (11) die Anwesenheit oder Abwesenheit eines Drucks in Fluss-Richtung definiert wird.

12. Dosierapparat für ein Fluidprodukt, zum Beispiel ein Farbmittel, **dadurch gekennzeichnet, dass** er ein Dosierventil (10) gemäß irgendeinem Anspruch von 1 bis 8 hat.

## Revendications

1. Vanne de dosage pour un produit fluide, par exemple un colorant, comprenant un élément au moins partiellement élastique ou en élastomère (11), présentant au moins une découpe (24) dans une partie centrale (12) de manière à définir au moins deux lèvres de coopération fermées/ouvertes (14), **caractérisée en ce qu'**elle comprend un élément capteur (30) associé audit élément au moins partiellement élastique (11) afin de détecter au moins un état fermé ou ouvert desdites lèvres (14), dans laquelle l'état ouvert est déterminé par la pression exercée par ledit produit fluide, ledit élément capteur (30) est constitué d'une barre de support ayant un élément sensible (15) à une extrémité, enfoui à l'intérieur de l'élément élastique ou en élastomère (11), capable de détecter une flexion d'au moins une lèvre (14) de la soupape au moyen d'une variation de sa conductivité au moment où ladite lèvre (14) est fléchie à l'ouverture, dans laquelle ledit élément sensible (15) de l'élément capteur (30) est associé à deux zones de l'élément élastique ou en élastomère (11), respectivement une première zone (18) qui communique l'état fermé ou ouvert des lèvres (14) et une seconde zone (19) qui communique la présence de flexion dans la direction d'écoulement du produit fluide.

2. Vanne de dosage selon la revendication 1, **caractérisée en ce que** ledit élément sensible enfoui (15) de l'élément de capteur (30) a une épaisseur dans la plage de 0,1 à 0,2 millimètre.

3. Vanne de dosage selon la revendication 1, **caractérisée en ce que** ladite barre (16) est réalisée en matière plastique recouverte d'une peinture conductrice.

4. Vanne de dosage selon la revendication 3, **caractérisée en ce que** ladite barre (16) a une conformation comprenant deux zones de flexion (A, B) pour accentuer la sensibilité lors de la détection d'une flexion.

5. Vanne de dosage selon la revendication 1, **caractérisée en ce que** la partie de l'élément élastique ou en élastomère (11) où l'élément sensible (15) de l'élément capteur (30) est noyé a une épaisseur dans la plage de 1 millimètre.

6. Vanne de dosage selon la revendication 1, **caractérisée en ce que** l'élément capteur (30) est moulé conjointement avec le matériau de l'élément élastique ou en élastomère (11).

7. Vanne de dosage selon la revendication 1 ou 2, **caractérisée en ce que** l'élément capteur (30), en correspondance avec sa partie d'extrémité à l'extérieur de l'élément élastique ou en élastomère (11), présente une zone rigidifiée et renforcée (17).

8. Vanne de dosage selon la revendication 1, **caractérisée en ce que** ledit élément capteur (30) est associé à des moyens de traitement (20) pour détecter des informations provenant dudit élément capteur (30) sur l'état ouvert/fermé desdites lèvres (14).

9. Méthode de dosage d'un produit fluide au moyen d'une vanne de dosage (10) selon l'une quelconque des revendications précédentes, dans laquelle en commandant au moyen de l'élément capteur (30) au moins la position desdites lèvres (14), les moyens de distribution et de dosage (21) du produit fluide sont contrôlés et dirigés.

10. Méthode selon la revendication 9, **caractérisée en ce qu'**en commandant au moyen de l'élément capteur (30) au moins la position desdites lèvres (14), les conditions de la vanne de dosage (10) sont déterminées, et les interventions et le type des interventions sont définis.

11. Méthode selon l'une quelconque des revendications 9 à 10, **caractérisée en ce qu'**en commandant au moyen de l'élément capteur (30) au moins l'état d'une partie centrale (12) de l'élément élastique ou en élastomère (11), la présence ou l'absence de pression dans la direction d'écoulement est définie.

12. Machine de dosage pour un produit fluide, par exemple un colorant, **caractérisée en ce qu'**elle comporte une vanne de dosage (10) selon l'une quelconque des revendications 1 à 8.
